# EUROPEAN PATENT SPECIFICATION

(11) **EP 2 532 846 B1**
(45) Date of publication and mention of the grant of the patent: **08.04.2015**
(21) Application number: 11739781.0
(22) Date of filing: 02.02.2011
(51) Int. Cl.: F01L 13/00, F01L 1/14, F01L 1/18, F02D 13/02, F02D 15/00, F01M 9/10

(54) **ENGINE**
MOTOR
MOTEUR

(30) Priority: 04.02.2010 JP 2010023605; 04.02.2010 JP 2010023604
(43) Date of publication of application: 12.12.2012
(73) Proprietor: Yanmar Co., Ltd., Osaka-shi, Osaka 530-8311 (JP)
(72) Inventor: TAKAHATA Yasuyuki, Osaka-shi, Osaka 530-8311 (JP); YOKOYAMA Tetsuya, Osaka-shi, Osaka 530-8311 (JP)
(74) Representative: Jostarndt, Hans-Dieter
(86) International application number: PCT/JP2011/052146
(87) International publication number: WO 2011/096433

(56) References cited:
- JP-A- 2004 251 167
- JP-A- 2008 025 551
- JP-U- H 046 709

## Description

### Technical Field

The present invention relates to an art of engines adopting so-called miller cycle, wherein the timing of closure of an air intake valve is set to timing earlier/later than an intake lower dead point.

### Background Art

In recent years, the art of engines adopting so-called miller cycle, wherein the timing of closure of an air intake valve is set to timing earlier/later than an intake lower dead point, has become public knowledge.

For example, as disclosed in Patent Literature 1, in some engines, so-called slow-closing type miller cycle is adopted. In the slow-closing type miller cycle, the timing of closure of the air intake valve is set to timing later than the intake lower dead point. In such engines, by means of adopting the slow-closing type miller cycle, the compression ratio of the intake air can be kept small, whereas the expansion ratio of exploded fuel gas is increased. Accordingly, high thermal efficiency can be achieved.

In some other engines, so-called quick-closing type miller cycle is adopted. In the quick-closing type miller cycle, the timing of closure of the air intake valve is set to timing earlier than the lower dead point. In such engines, by means of adopting the quick-closing type miller cycle, combustion temperature can be reduced by adiabatic expansion of the air in a cylinder. Accordingly, high thermal efficiency can be achieved and the amount of NOx generated can be reduced.

When the quick-closing type miller cycle is applied to the engine, the air amount taken into the engine will decrease. This will cause performance deterioration such as increase of black smoke generated or deterioration of acceleration property and start-up performance. Therefore, in this case, target pressure ratio of a supercharger is made higher than before. Here, the supercharger is driven by exhaust gas, and is provided for supplying compressed air into the cylinder of the engine. This will prevent the decrease of the air amount taken into the engine. This will also prevent performance deterioration of the engine.

However, during low-load operation of the engine, exhaust gas quantity of the engine is too small to drive the supercharger sufficiently. Therefore, it is impossible to make target pressure ratio of the supercharger higher than before. In this case, the air amount taken into the engine is not high enough. This will cause performance deterioration of the engine.

It is necessary to adjust the timing of closure of the air intake valve appropriately depending on engine load so as to ensure enough air to be taken into the engine in order to prevent performance deterioration of the engine. However, the timing of closure of the air intake valve is determined on the basis of a cam profile of a cam which is provided for opening/closing the air intake valve. For this reason, complicated configuration is needed to adjust the timing of closure of the air intake valve appropriately. For example, the "complicated configuration" includes a mechanism for changing a relative angle between the cam and a cam shaft on which the cam is formed. Such a configuration applied to exhaust valves is revealed by document JP-A-2004251167.

### Prior art documents

### Patent Literature

Patent Literature 1: the Japanese Patent Laid Open Gazette Hei 8-291715

### Disclosure of Invention

### Problems to Be Solved by the Invention '

. The present invention is provided in consideration of the above problems, and the purpose of the present invention is to provide an engine which can change opening/closing timing of the air intake valve with simple configuration.

### Means for Solving the Problems

The above-mentioned problems are solved by the following means.

Briefly stated, an engine embodying the present invention is provided with a valve timing change mechanism capable of changing the timing of closure of an air intake valve: wherein the valve timing change mechanism is provided with: a cam shaft which is rotated in an interlocked manner with a crankshaft; a first cam and a second cam which are provided to the cam shaft and have mutually different cam profile; a first swing arm with which the first cam is in contact and which rocks as the first cam rotates; a second swing arm with which the second cam is in contact and which rocks as the second cam rotates; a push rod which is connected to the first swing arm and causes the first swing arm and the air intake valve to cooperate with each other; and a switchover means which can switch between a first state in which the first swing arm is caused to rock in response to the rotation of the first cam and a second state in which the first swing arm together with the second swing arm is caused to rock in response to the rotation of the second cam.

The switchover means embodying the present invention is provided with: a receiving member which is attached to the second swing arm; and a hydraulic actuator which is attached to the first swing arm, with that the first swing arm is parted from the first cam and the first swing arm is operated integrally with the second swing arm by making the hydraulic actuator be brought into in contact with the receiving member.

With regard to the engine embodying the present invention, the hydraulic actuator is actuated by the switchover means by using lubricating oil supplied to each portion of the engine.

With regard to the engine embodying the present invention, lubricating oil for actuating the hydraulic actuator is supplied to the hydraulic actuator via: an oil path for actuation of the hydraulic actuator which is formed in the first swing arm; and a first oil path which is formed in a swing arm shaft which is swingably supporting the first swing arm.

With regard to the engine embodying the present invention, the first swing arm is provided with a cam roller which is rotatably supported by the first swing arm and with which the first cam is in contact. And lubricating oil for lubricating the cam roller is provided to the cam roller via: an oil path for lubrication of the roller which is formed in the first swing arm separately from the oil path for actuation of the hydraulic actuator; and a second oil path which is formed in the swing arm shaft separately from the first oil path.

With regard to the engine embodying the present invention, a selector valve for changing the operation of the hydraulic actuator is mounted on the first swing arm.

With regard to the engine embodying the present invention, at least one of the cam profile of the first cam and the cam profile of the second cam is designed to adjust the timing of closure of the air intake valve earlier than the lower dead point in the suction stroke.

The engine embodying the present invention is further provided with a supercharger forcibly feeding air into a cylinder by the use of exhaust gas energy. And the valve timing change mechanism is so configured that, during the high-load operation, the timing of closure of the air intake valve is set to timing earlier than the lower dead point in the suction stroke, and, during the low-load operation, the timing of closure of the air intake valve is set to timing later than that during the high-load operation.

With regard to the engine embodying the present invention, the valve timing change mechanism is so configured that, during low-load operation, the timing of closure of the air intake valve is set to timing near the lower dead point in the suction stroke.

### Effect of the Invention

The present invention configured as the above brings the following effects.

In the present invention, the opening/closing timing of the air intake valve is synchronized with the rotation of the first cam or the second cam. The first cam and the second cam are different in cam profile from each other. The opening/closing timing of the air intake valve can be changed to the timing corresponding to each cam. In this case, the opening/closing timing of the air intake valve can be switched with simple configuration. Accordingly, manufacturing costs can be reduced by reducing the number of parts and assembling manhours. And occurrence of a size error and occurrence of a mistake at an assembling time is prevented by reducing the number of parts and assembling manhours. Consequently, overall reliability of engine is improved.

In the present invention, the switchover means can be simply constituted. Accordingly, manufacturing costs can be reduced by reducing the number of parts and reducing assembling manhours.

In the present invention, the switching mechanism is activated by utilizing lubricating oil of the engine, so that it is not necessary to separately use hydraulic pump etc. Accordingly, manufacturing costs can be reduced by reducing the number of parts and reducing assembling manhours.

In the present invention, it is not necessary to separately arrange pipelines etc. for supplying lubricating oil for actuation of the hydraulic actuator. Consequently, the number of parts can be reduced and also assembling manhours can be reduced. Moreover, the oscillation of the first swing arm does not influence feeding of lubricating oil to the hydraulic actuator. Accordingly, the lubricating oil can be stably supplied to the hydraulic actuator.

In the present invention, it is not necessary to separately arrange pipelines etc. for supplying lubricating oil for lubrication of the cam rollers. Accordingly, the number of parts can be reduced and also assembling manhours can be reduced. Also, lubricating oil can be supplied to the cam rollers through the oil path which is formed separately from the oil path for actuation of the hydraulic actuator. Consequently, lubricating oil can be stably supplied to the cam rollers, and thus the cam rollers can be surely lubricated.

In the present invention, the number of parts can be reduced and also assembling manhours can be reduced. The switchover means can be compactly constituted and thereby the space required for the switchover means is reduced.

In the present invention, the combustion temperature can be reduced by adiabatic expansion of the air in the cylinder because the timing of closure of the air intake valve is accelerated. Accordingly, reduction of NOx emission can be materialized.

In the present invention, the supercharger is made to sufficiently function during the high-load operation since the amount of the exhaust gas is large. In this case, the combustion temperature is lowered by so-called quick-closing type miller cycle. Accordingly, reduction of NOx emission can be materialized. On the other hand, the function of the supercharger will drop during the low-load operation since the amount of exhaust gas is small. If the timing of closure of the air intake valve is the same as that of during the high-load operation, the forcible feeding quantity of the air into the cylinder is decreased. However, in this case, the timing of closure of the air intake valve is set to timing later than that during the high-load operation. That is to say, the timing of closure of the air intake valve is set to timing near the intake lower dead point. Accordingly, the air is sufficiently fed into the cylinder. Consequently, increase of black smoke generated can be prevented. Also, performance deterioration such as deterioration of acceleration property and start-up performance can be prevented. In this way, the timing of closure of the air intake valve is switched between during the low-load operation and during the high-load operation. Accordingly, the amount of NOx generated can be reduced, and also performance deterioration can be prevented.

In the present invention, enough air can be sufficiently fed during the low-load operation. Accordingly, increase of black smoke generated can be prevented. Also, performance deterioration such as deterioration of acceleration property and start-up performance can be prevented.

### Brief Description of Drawings

[Fig. 1] It is a cross-sectional view showing an engine which is one embodiment of the present invention.
[Fig. 2] It is a schematic diagram showing the aspect of the connection between the engine and a supercharger.
[Fig. 3] It is a front cross-sectional view showing a first swing arm included in a valve timing change mechanism.
[Fig. 4] It is a plan view showing the valve timing change mechanism.
[Fig. 5] It is a bottom view showing the valve timing change mechanism.
[Fig. 6] It is a front view showing a second swing arm included in the valve timing change mechanism.
[Fig. 7] It is a front view showing the aspect of the first swing arm rocking upward together with the second swing arm during a first state.
[Fig. 8] It is a front view showing the aspect of the first swing arm rocking downward separately from the second swing arm during the first state.
[Fig. 9] It is a figure showing opening/closing timing of an air intake valve during the first state. (a) shows the relation between a crank angle and the opening/closing timing of the air intake valve. (b) shows the relation the crank angle and a lifting amount of the air intake valve.
[Fig. 10] It is a front cross-sectional view showing the aspect of the first swing arm include in the valve timing change mechanism during a second state.
[Fig. 11] It is a front view showing the aspect of the first swing arm and the second swing arm concurrently rocking upward during the second state.
[Fig. 12] It is a front view showing the aspect of the first swing arm rocking in synchronization with the oscillation of the second swing arm during the second state.
[Fig. 13] It is a figure showing opening/closing timing of the air intake valve during the second state. (a) shows the relation between the crank angle and the opening/closing timing of the air intake valve. (b) shows the relation the crank angle and the lifting amount of the air intake valve.

### Description of Notations

- 1: engine
- 2: supercharger
- 3: intercooler
- 4: hydraulic pump
- 11a: cylinder
- 16: air intake valve
- 37: valve timing change mechanism
- 40: swing arm shaft
- 50: first swing arm
- 60: second swing arm
- 70: push rod
- 80: valve arm
- 90: cam shaft
- 91: first cam
- 92: second cam
- 100: switchover means
- 160: control device

### The Best Mode for Carrying out the Invention

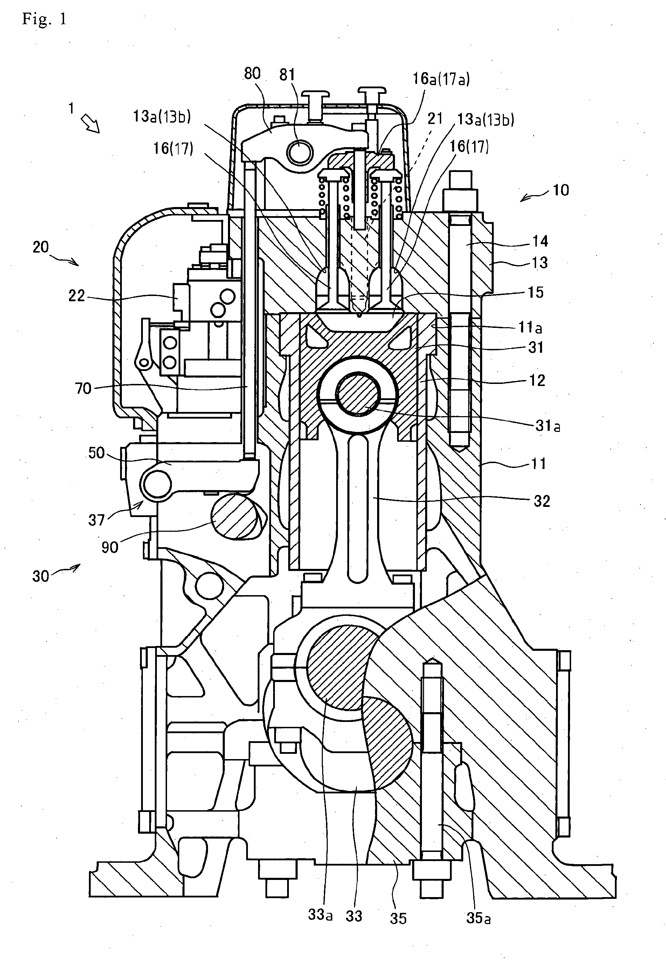

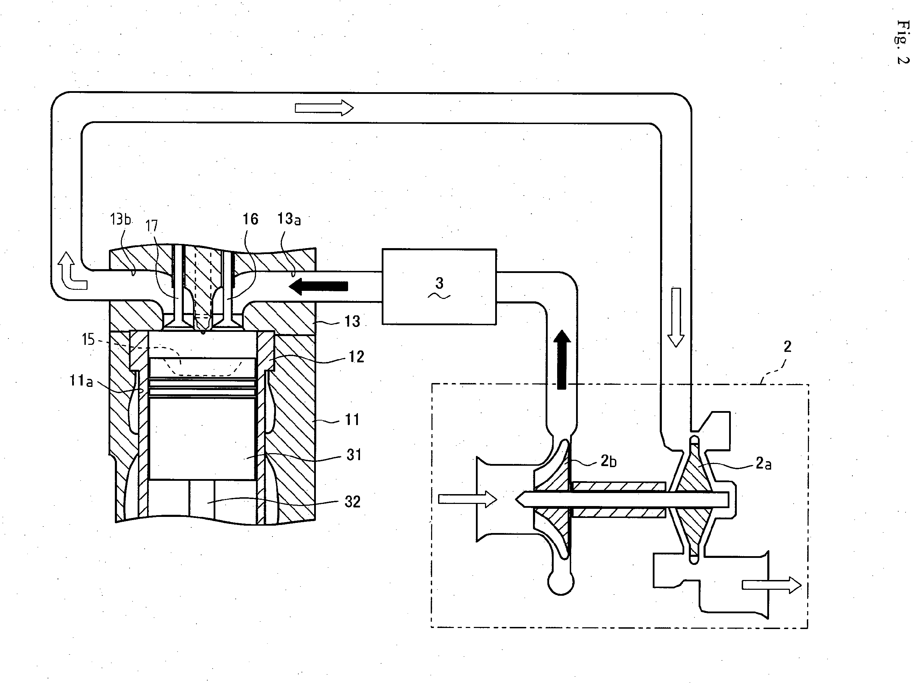

First of all, an explanation will be given on an engine 1 which is one embodiment of the present invention with reference to Fig. 1 and Fig. 2. The engine 1 is a so-called in-line multiple cylinder engine having several pistons 31 arranged in series. Hereinafter, explanation will be given on one cylinder for ease of explanation. The number of pistons and their arrangement etc. is not limited to that of the engine 1 in this embodiment.

As shown in Fig. 1, the engine 1 is provided with an engine body 10, a fuel supply part 20, and a motion part 30 etc. The engine body 10 is provided with a cylinder block 11 and a cylinder head 13 etc. The fuel supply part 20 is provided with a fuel injection nozzle 21 and a fuel injection pump 22 etc. The motion part 30 is provided with the piston 31, a connecting rod 32, a crankshaft 33, and a valve timing change mechanism 37 etc.

When it comes to the engine body 10, a cylinder 11a is penetrating through the cylinder block 11 from an upper surface to a lower surface. The cylinder 11a is extended in upper and lower direction, having inserted a cylinder liner 12 therein. An outer diameter of the cylinder liner 12 is nearly matching an inner diameter of the cylinder 11a.

The cylinder liner 12 is formed into a substantially circular pipe shape, having the piston 31 slidably inserted therein.

The cylinder head 13 is fastened to the upper surface of the cylinder block 11 by using head bolts 14 etc. The cylinder liner 12 and an upper surface of the piston 31 is forming a combustion chamber 15.

Also, an intake passage 13a for feeding the air into the combustion chamber 15 is formed in the cylinder head 13. An air intake valve 16 capable of opening and closing the intake passage 13a is placed within the cylinder head 13. Also, an exhaust passage 13b for discharging exhaust gas is formed in the cylinder head 13. An exhaust valve 17 capable of opening and closing the exhaust passage 13b is placed within the cylinder head 13. When it comes to the cylinder head 13, each cylinder has two air intake valves 16 and two exhaust valves 17. The two air intake valves 16 are connected to each other by an intake connecting member 16a, and the two exhaust valves 17 are connected to each other by an exhaust connecting member 17a.

As shown in Fig. 2, an exhaust turbocharger type supercharger 2 is placed within the intake passage 13a and the exhaust passage 13b. The supercharger 2 is actuated by the use of exhaust gas. The supercharger 2 is provided with a turbine 2a and a compressor 2b mounted coaxially with the turbine 2a. The turbine 2a is rotated by the use of exhaust gas supplied through the exhaust passage 13b from the combustion chamber 15. The rotation of the turbine 2a is transmitted to the compressor 2b mounted coaxially with the turbine 2a. The intake air is compressed by the compressor 2b and then supplied to the combustion chamber 15 through the intermediary of the intake passage 13a. Accordingly, the supercharger 2 is so configured that the air is forcibly fed into the cylinder 11a by the use of exhaust gas energy of the engine 1.

On the intake passage 13a, an intercooler 3 is provided in the downstream side from the compressor 2b. The intercooler 3 is provided for cooling the air passed in the intake passage 13a. The temperature of the intake air will rise when compressed by the supercharger 2. After that the intake air is cooled down when passing through the intercooler 3, and then the intake air is supplied to the engine 1.

As shown in Fig. 1, when it comes to the fuel supply part 20, the fuel injection pump 22 is cooperatively connected to the crankshaft 33 through gears etc. The details of the crankshaft 33 will be described later. The fuel injection pump 22 is driven by the rotational motion of the crankshaft 33, whereby the fuel in a fuel tank is fed to the fuel injection nozzle 21. The fuel injection pump 22 is disposed sideways of the cylinder block 11, and is connected to the fuel injection nozzle 21 through a fuel pipe.

The fuel injection nozzle 21, which engages in the construction of the fuel supply part 20, is placed within the cylinder head 13, protruding a tip part into the combustion chamber 15. The fuel is injected from a jet port provided on the tip part of the fuel injection nozzle 21 into the combustion chamber 15. The fuel injection nozzle 21 is so configured that the fuel supplied from the fuel injection pump 22 can be injected appropriately depending on the operating condition of the engine 1.

When it comes to the motion part 30, as was explained earlier, the piston 31 is fitted to the cylinder liner 12 slidably to the upper and lower direction. The piston 31 is formed into a substantially circular pipe shape. The piston 31 may be formed from cast iron or aluminum alloy etc. And a piston pin 31a is provided at an intermediate part in the vertical direction of the piston 31. The piston pin 31a is vertically crossing the axial direction of the cylinder liner 12. Also, the piston pin 31a is disposed in parallel to the axial direction of the after-mentioned crankshaft 33.

The connecting rod 32 has circular pipe shaped members at both the upper and lower terminals. The upper terminal of the connecting rod 32 is rockably inserted into the piston pin 31a which is provided with the piston 31. And the lower terminal of the connecting rod 32 is turnably inserted into the crank pin 33a of the crankshaft 33.

The crankshaft 33 is arranged at the lower part of the cylinder block 11, vertically crossing the axial direction of the cylinder liner 12. Since the crankshaft 33 is connected with the piston 31 by the connecting rod 32, the vertically reciprocating motion of the piston 31 is transmitted to the crankshaft 33 through the connecting rod 32 and converted into the rotational motion of the crankshaft 33.

The crankshaft 33 is rotatably supported by a metal cap 35. The metal cap 35 is fastened to the lower part of the cylinder block 11 by using cap bolts 35a etc.

The valve timing change mechanism 37 to open and close the air intake valves 16 and exhaust valves 17 respectively is provided with cams, swing arms, push rods, and valve arms etc. The valve timing change mechanism 37 is a mechanism for opening and closing the valves 16, provided with a cam shaft 90, a first swing arm 50, a push rod 70, and a valve arm 80 etc. The valve timing change mechanism 37 to open/close the valves 16 is driven in synchronization with the rotational motion of the crankshaft.

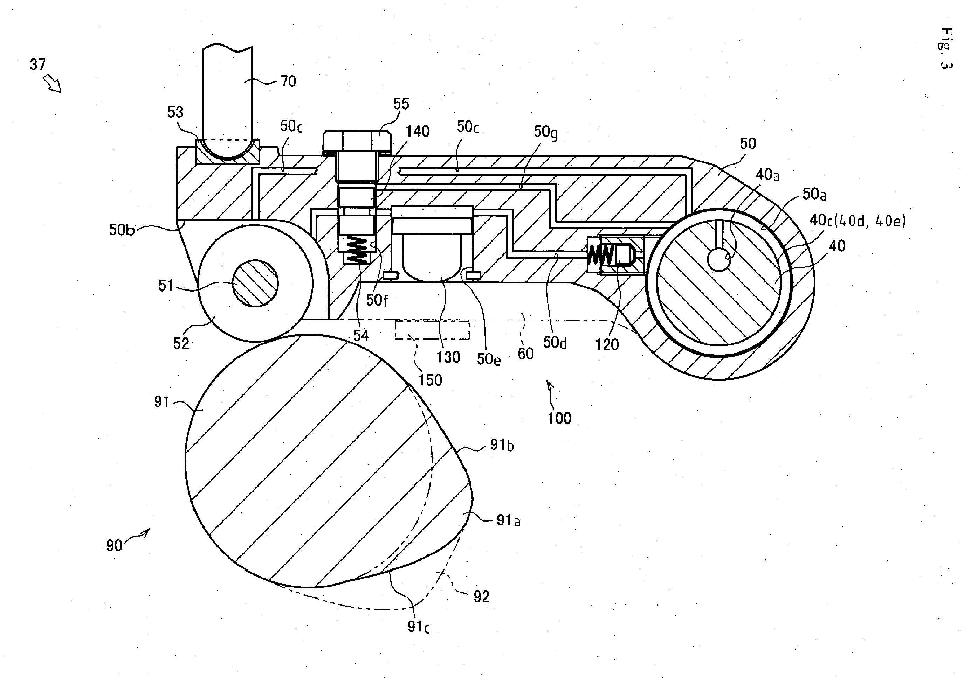

The cam shaft 90 is disposed in parallel to the axial direction of the crankshaft 33. The cam shaft 90 is interlockingly connected to the crankshaft 33 via gears etc. The cam shaft 90 is rotationally driven due to the rotational motion of the crankshaft 33. The first swing arm 50 rocks as a first cam 91 and a second cam 92 (see Fig. 3) rotate, according to the cam profiles thereof. The first cam 91 and the second cam 92 is provided to the cam shaft 90.

The push rod 70 penetrates through the cylinder head 13 to extend upward from inside the cylinder block 11. The lower terminal of the push rod 70 is connected to the first swing arm 50. The upper terminal of the push rod 70 is connected to a first end portion of the valve arm 80. The valve arm 80 is swingably supported by a valve arm shaft 81. The valve arm shaft 81 is disposed in parallel to the cam shaft 90. A second end portion of the valve arm 80 is connected to the intake connecting member 16a. The intake connecting member 16a is disposed on the upper terminals of the air intake valves 16.

Cams for opening/closing the exhaust valve 17 are also provided to the cam shaft 90. Swing arms (not shown) rock as the cams rotate, according to the cam profiles thereof. The swing arms are connected to the exhaust connecting member 17a through the intermediary of a push rod and a valve arm (not shown). The exhaust connecting member 17a is disposed on the upper terminals of the exhaust valves 17.

Secondly, a brief explanation will be given on operation mode of the engine 1 during operation.

The engine 1 is a four cycle engine, whose operation mode during operation is consisting of four processes: a suction stroke, a compression stroke, an expansion stroke, and an exhaust stroke. When the crankshaft 33 is rotated twice, all processes are completed. When the cam shaft 90 is rotated once, all processes are completed.

During the suction stroke, the exhaust valve 17 is closed, whereas the air intake valve 16 is opened. Both valves are placed within the cylinder head 13. And the piston 31 slides downward in the cylinder 11a. In this way, the air is inhaled into the cylinder 11a from the outside of the engine 1 through the intake passage 13a. During the suction stroke, the air is compressed by the supercharger 2 and cooled down by the intercooler 3, and then supplied into the combustion chamber 15.

During the compression stroke, the exhaust valve 17 and the air intake valve 16 are both closed. And the piston 31 slides upward in the cylinder 11a. In this way, the air inside the cylinder 11a is compressed. During the compression stroke, fuel is injected from the fuel injection nozzle 21 into the compressed high temperature and high pressure air. Fuel is fed in a state to be dispersed in a combustion chamber 15, and then combustion is started. Combustion of fuel causes increase of pressure in the combustion chamber 15.

During the expansion stroke, the piston 31 slides downward due to the increased pressure inside the combustion chamber 15 which is caused by the aforementioned compression stroke. As such, the driving force is applied to the crankshaft 33 by pushing down the piston 31.

During the exhaust stroke, the air intake valve 16 is closed, whereas the exhaust valve 17 is opened. And the piston 31 slides upward in the cylinder 11a. In this way, exhaust gas in the cylinder 11a is exhausted to the outside through the exhaust passage 13b. The exhaust gas passes through the turbine 2a of the supercharger 2 in the middle of the exhaust passage 13b, whereby the turbine 2a is rotated.

The timing of opening/closing the air intake valve 16 and the exhaust valve 17 in each aforementioned process is adjusted by the valve timing change mechanism 37 interlocking with the rotational motion of the crankshaft 33. In this way, opening/closing by the air intake valve 16 and the exhaust valve 17 is carried out respectively at predetermined timing in each aforementioned process.

Next, a detailed explanation will be given on the valve timing change mechanism 37.

As shown in Figs. 3-6, opening/closing by the air intake valve 16 is carried out at predetermined timing by the valve timing change mechanism 37. The timing of opening/closing the aforementioned air intake valve 16 is changed depending on the operation state of the engine 1. The valve timing change mechanism 37 is provided with a swing arm shaft 40, the first swing arm 50, a second swing arm 60, the push rod 70, the cam shaft 90, and a switchover means 100 etc.

As shown in Figs. 3-5, the swing arm shaft 40 is formed into a circular cylindrical shape. The swing arm shaft 40 is bridged laterally to the cylinder block 11, and is disposed in parallel to the axial direction of the crankshaft 33 (hereinafter, the axial direction of the crankshaft 33 is defined as "front-back direction").

The first swing arm 50 is a roughly rectangular parallelepiped shaped member with the longitudinal direction directed to the right and left direction. The under surface of the center part of the first swing arm 50 in the longitudinal direction is formed into concave. A first end portion (the left end portion) of the first swing arm 50 in its longitudinal direction is formed with a first through hole 50a. The first through hole 50a is formed longitudinally, and the swing arm shaft 40 is inserted therein. In this way, the first swing arm 50 is swingably supported by the swing arm shaft 40. The lower part of a second end portion (the right end portion) of the first swing arm 50 in its longitudinal direction is formed with a first groove portion 50b. And a first cam roller 52 is provided as a cam roller inside the first groove portion 50b. The first cam roller 52 is provided in the state of protruding downward with respect to the under surface of the second end portion of the first swing arm 50. The first cam roller 52 is rotatably supported by a first roller shaft 51 which extends in the longitudinal direction. A rod support member 53 is attached to the upper surface of the second end portion of the first swing arm 50. A concavity, which is the concavity hemispheric upward, is formed on the rod support member 53.

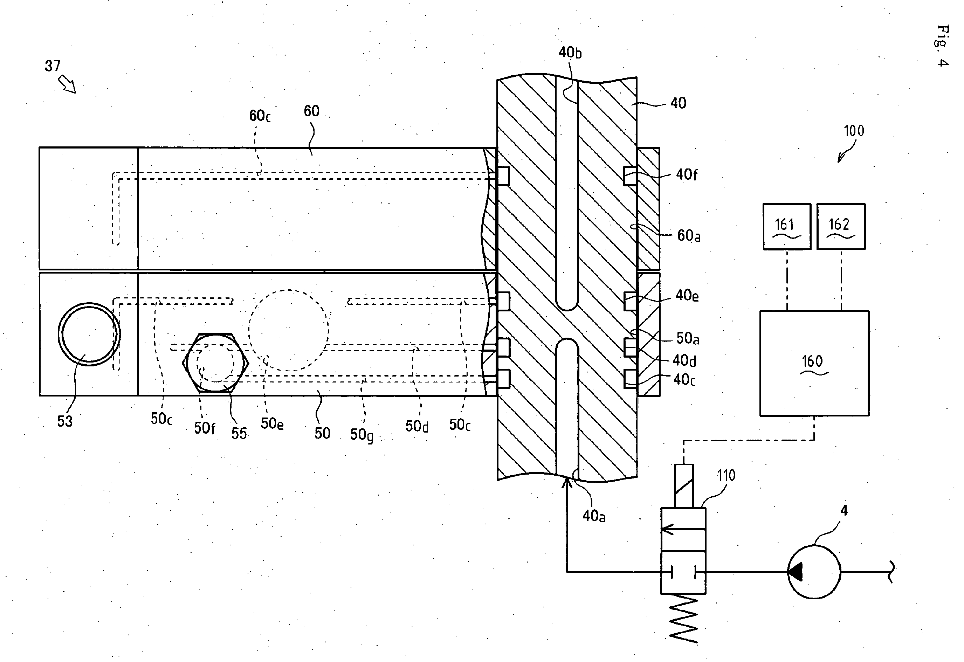

As shown in Figs. 4-6, the second swing arm 60 is a roughly rectangular parallelepiped shaped member with the longitudinal direction directed to the right and left direction. The second swing arm 60 is longitudinally arranged with the first swing arm 50 side by side. A first end portion of the second swing arm 60 in its longitudinal direction is formed with a second through hole 60a. The second through hole 60a is formed longitudinally, and the swing arm shaft 40 is inserted therein. In this way, the second swing arm 60 is swingably supported by the swing arm shaft 40. The first swing arm 50 and the second swing arm 60 are maintained in a state adjacent to each other. The lower part of a second end portion of the second swing arm 60 in its longitudinal direction is formed with a second groove portion 60b. And a second cam roller 62 is placed inside the second groove portion 60b. The second cam roller 62 is provided in the state of protruding downward with respect to the under surface of the second end portion of the second swing arm 60. The second cam roller 62 is rotatably supported by a second roller shaft 61 which extends in the longitudinal direction.

As shown in Fig. 1 and Fig. 3, the push rod 70 is a roughly columnar shaped member interlocking the first swing arm 50 and the valve arm 80. The lower terminal of the push rod 70 is formed into a hemispherical shape, whereby rockably fitted in the concavity of the rod support member 53 which is attached to the first swing arm 50. The upper terminal of the push rod 70 is rockably fitted to the first end portion of the valve arm 80.

As shown in Fig. 1, the valve arm 80 is provided for connecting the push rod 70 and the intake connecting member 16a. The valve arm 80 is rockably supported by a valve arm shaft 81. The valve arm shaft 81 is bridged laterally in the longitudinal direction. The first end portion of the valve arm 80 is connected to the upper terminal of the push rod 70, and the second end portion of the valve arm 80 is connected to the intake connecting member 16a.

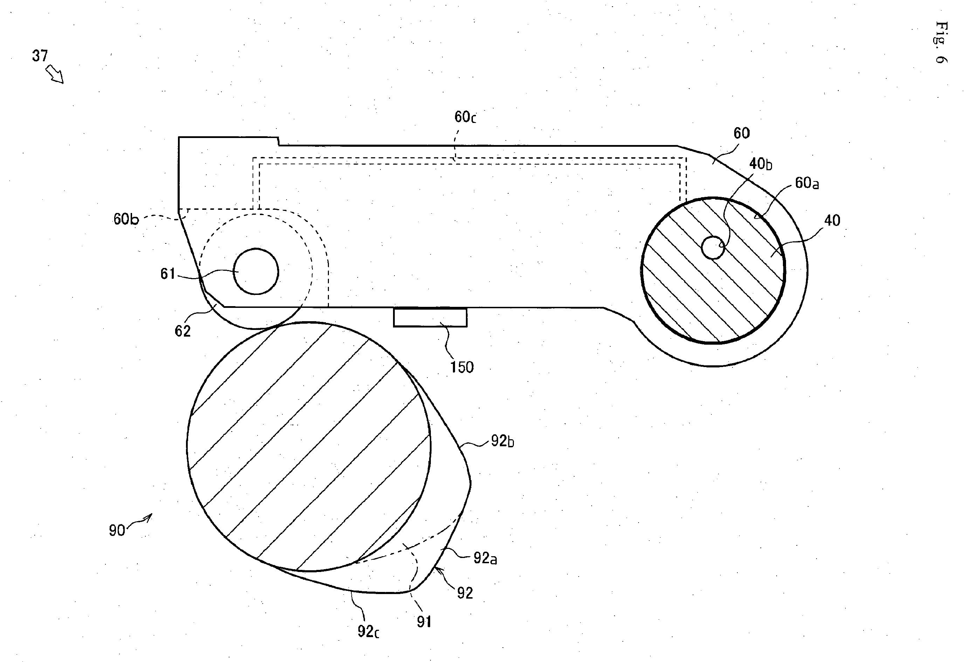

As shown in Fig. 3 and Fig. 6, the cam shaft 90 is disposed beneath the second end portions of the first swing arm 50 and the second swing arm 60 in the longitudinal direction, extending in the front-back direction. The cam shaft 90 is cooperatively connected to the crankshaft 33 through gears etc., whereby the cam shaft 90 is rotated with the rotation of the crankshaft 33. A first cam 91 and a second cam 92, which has mutually different cam profile with respect to the cam profile of the first cam 91, are provided to the cam shaft 90. The first cam 91 and the second cam 92 are arranged with a predetermined space in the axial direction (front-back direction). The first cam 91 is arranged at appropriate position on the cam shaft 90 so that the first cam 91 is in contact with the first cam roller 52 of the first swing arm 50 from below. The second cam 92 is arranged at appropriate position on the cam shaft 90 so that the second cam 92 is in contact with the second cam roller 62 of the second swing arm 60 from below.

As shown in Figs. 3-5, the switchover means 100 is provided for switching the operation states of the first swing arm 50 and the second swing arm 60, and also for changing the opening/closing timing of the air intake valve 16. The switchover means 100 is provided with a solenoid selector valve 110, a check valve 120, a hydraulic piston 130, a selector valve 140, a receiving member 150, and a control device 160 etc. These members and the swing arm shaft 40 together with oil paths formed in the first swing arm 50 are making up the switchover means 100.

As shown in Fig. 4, when the solenoid selector valve 110 receives the control signal, an intake port and a discharge port are communicated with each other. When the solenoid selector valve 110 does not receive the control signal, the communication of the intake port with the discharge port is cut off. The intake port of the solenoid selector valve 110 is connected to a hydraulic pump 4 which is provided as lubricating oil supply means. The hydraulic pump 4 is driven by the crankshaft 33. The lubricating oil stored in an oil pan (not shown) is sucked by the hydraulic pump 4 and fed under pressure. The lubricating oil fed under pressure by the hydraulic pump 4 is supplied to the intake port of the solenoid selector valve 110, and also supplied to each part of the engine 1 (ex. the valve arm shaft 81, the crankpin 33a, etc.) through oil paths (not shown). In this way, each part is lubricated with the lubricating oil.

A first oil path 40a, a second oil path 40b, a first outer peripheral oil path 40c, a second outer peripheral oil path 40d, a third outer peripheral oil path 40e, and a fourth outer peripheral oil path 40f are formed in the swing arm shaft 40.

The first oil path 40a and the second oil path 40b are extending in parallel to the axial direction inside the swing arm shaft 40, being formed in the in-line arrangement for and aft. The first outer peripheral oil path 40c, the second outer peripheral oil path 40d, and the third outer peripheral oil path 40e are formed into annular grooves, and are disposed at predetermined spaces in the axial direction of the swing arm shaft 40. The first outer peripheral oil path 40c, the second outer peripheral oil path 40d, and the third outer peripheral oil path 40e are arranged at positions facing the inner peripheral surface of the first through hole 50a of the first swing arm 50. The fourth outer peripheral oil path 40f is formed into an annular groove on the outer periphery of the swing arm shaft 40, arranged at a position facing the inner peripheral surface of the second through hole 60a of the second swing arm 60. The first oil path 40a is continuously connected to the first outer peripheral oil path 40c and the second outer peripheral oil path 40d, but is not connected to the second oil path 40b. The second oil path 40b is continuously connected to the third outer peripheral oil path 40e and the fourth outer peripheral oil path 40f. Also, the first oil path 40a is continuously connected to the discharge port of the solenoid selector valve 110. The second oil path 40b is communicatively connected with the hydraulic pump 4 through oil paths (not shown). In other words, the first oil path 40a and the second oil path 40b is respectively communicated with the hydraulic pump 4 through the intermediary of respective oil paths.

As shown in Fig. 3 and Fig. 4, an oil path for lubrication of the first roller 50c as an oil path for lubrication of the roller, an oil path for actuation of the piston 50d as an oil path for actuation of the hydraulic actuator, a piston hole 50e, a selector valve hole 50f, and a switching oil path 50g are formed in the first swing arm 50.

The oil path for lubrication of the first roller 50c is formed in the first swing arm 50, extending along the longitudinal direction thereof. A first end terminal of the oil path for lubrication of the first roller 50c is communicated with the third outer peripheral oil path 40e of the swing arm shaft 40, whereas a second end terminal thereof is communicated with the first groove portion 50b of the first swing arm 50. The second end terminal of the oil path for lubrication of the first roller 50c is disposed above the first cam roller 52.

The oil path for actuation of the piston 50d is formed in the first swing arm 50, extending along the longitudinal direction thereof. A first end terminal of the oil path for actuation of the piston 50d is communicated with the second outer peripheral oil path 40d of the swing arm shaft 40, whereas a second end terminal thereof is communicated with the first groove portion 50b of the first swing arm 50. The check valve 120, the hydraulic piston 130, and the selector valve 140 are provided in the middle of the oil path for actuation of the piston 50d.

The check valve 120 allows lubricating oil to flow to the first groove portion 50b side from the first outer peripheral oil path 40c side, whereas the check valve 120 prevents lubricating oil to flow to the first outer peripheral oil path 40c side from the first groove portion 50b side.

The hydraulic piston 130 is a hydraulic actuator which is disposed inside the piston hole 50e. The piston hole 50e is formed between the check valve 120 and the first groove portion 50b of the first swing arm 50. The piston hole 50e forms a part of the oil path for actuation of the piston 50d. The piston hole 50e is a columnar hole, which is opened downward of the first swing arm 50. The hydraulic piston 130 has a hemispherical bottom, and is disposed in the piston hole 50e slidably in the vertical direction.

The selector valve 140 is disposed inside the selector valve hole 50f. The selector valve hole 50f is formed between the piston hole 50e and the first groove portion 50b of the first swing arm 50. The selector valve hole 50f forms a part of the oil path for actuation of the piston 50d and the switching oil path 50g. The selector valve hole 50f is a columnar hole, which is opened upward of the first swing arm 50. The selector valve 140 is disposed in the selector valve hole 50f slidably in the vertical direction, and is urged upward by a spring 54. The upper end portion of the selector valve hole 50f is closed by a bolt 55. When the selector valve 140 is urged upward by the spring 54 and is kept in upper position, the piston hole 50e and the first groove portion 50b are communicated with each other through the oil path for actuation of the piston 50d, whereby lubricating oil can be flowed to the first groove portion 50b from the piston hole 50e.

The switching oil path 50g is formed in the first swing arm 50, extending along the longitudinal direction thereof. A first end portion of the switching oil path 50g is communicated with the first outer peripheral oil path 40c of the swing arm shaft 40, whereas a second end portion thereof is communicated with the selector valve hole 50f. The second end portion of the switching oil path 50g is disposed above the selector valve 140.

As shown in Fig. 4 and Fig. 6, an oil path for lubrication of the second roller 60c is formed in the second swing arm 60.

The oil path for lubrication of the second roller 60c is formed in the second swing arm 60, extending along the longitudinal direction thereof. A first end terminal of the oil path for lubrication of the second roller 60c is communicated with the fourth outer peripheral oil path 40f of the swing arm shaft 40, whereas a second end terminal thereof is communicated with the second groove portion 60b of the second swing arm 60. The second end terminal of the oil path for lubrication of the second roller 60c is disposed above the second cam roller 62.

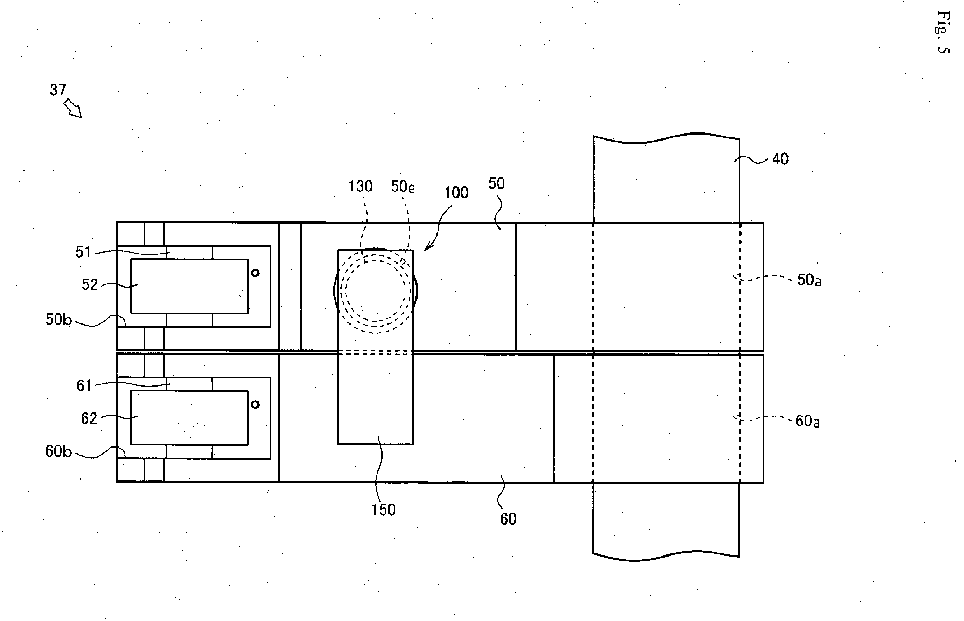

As shown in Fig. 5 and Fig. 6, the receiving member 150 is formed into a plate like shape, and is attached to the lower surface of the second swing arm 60. The receiving member 150 is extending forward from the lower side of the second swing arm 60, extended to the lower side of the first swing arm 50. An extended end part of the receiving member 150 overlaps the piston hole 50e of the first swing arm 50 in a bottom surface view. The extended end part of the receiving member 150 is facing the concave which is formed on the under surface of the first swing arm 50.

As shown in Fig. 4, the control device 160 is provided for operating the solenoid selector valve 110 according to various type signals and programs etc. The control device 160 is provided with a central processing unit, a storage device etc. The control device 160 is connected to a fuel injection quantity detection means 161, an engine rotation speed detection means 162, and the solenoid selector valve 110.

The fuel injection quantity detection means 161 is provided for detecting fuel quantity injected in the combustion chamber 15 through the fuel injection nozzle 21 (fuel injection quantity). In particular, the fuel injection quantity detection means 161 is a rack position sensor which detects the position of a rack. The fuel quantity injected through the fuel injection nozzle 21 is adjusted by controlling the rack position.

The engine rotation speed detection means 162 is provided for detecting the rotation speed of the engine 1.

The control device 160 has an output map stored therein. The output map is provided for calculating the output of the engine 1 on the basis of fuel injection quantity detected by the fuel injection quantity detection means 161 and engine rotation speed detected by the engine rotation speed detection means 162. The control device 160 calculates the output of the engine 1 on the basis of fuel injection quantity, engine rotation speed, and the output map, and determines whether the engine 1 is in a high output (high-load) operating state or in a low output (low-load) operating state. The threshold value for discriminating high-load from low-load is predetermined by experimentation, numerical calculation etc.

When it is determined by the control device 160 that the engine 1 is in the high-load state, control signal will not be sent to the solenoid selector valve 110, whereby the communication of the intake port with the discharge port in the solenoid selector valve 110 is cut off. On the other hand, when it is determined by the control device 160 that the engine 1 is in the low-load state, control signal will be sent to the solenoid selector valve 110, whereby the intake port and the discharge port of the solenoid selector valve 110 are communicated with each other.

Next, an explanation will be given on operation mode of the valve timing change mechanism 37 which is constituted as described above. Firstly, an explanation will be given for the case in which the engine 1 is in the high-load state.

When it is determined by the control device 160 that the engine 1 is in the high-load state, the communication of the intake port with the discharge port in the solenoid selector valve 110 is cut off (hereinafter, this state is defined as "a first state"). Accordingly, the lubricating oil from the hydraulic pump 4 will not be fed to the first oil path 40a of the swing arm shaft 40. On the other hand, the hydraulic pump 4 is communicated with the second oil path 40b of the swing arm shaft 40 via oil paths which are not illustrated here, whereby the lubricating oil from the hydraulic pump 4 is fed to the third outer peripheral oil path 40e and the fourth outer peripheral oil path 40f via the second oil path 40b. The lubricating oil fed to the third outer peripheral oil path 40e flows further through the oil path for lubrication of the first roller 50c of the first swing arm 50, and then fed to the first groove portion 50b. In this way, the first cam roller 52 is lubricated. On the other hand, the lubricating oil fed to the fourth outer peripheral oil path 40f flows further through the oil path for lubrication of the second roller 60c of the second swing arm 60, and then fed to the second groove portion 60b. In this way, the second cam roller 62 is lubricated.

When the cam shaft 90 rotates in this state, the first cam roller 52 and the first cam 91 are rotated in contact with each other. As a result, the first swing arm 50 oscillates with the swing arm shaft 40 as a fulcrum in accordance with the cam profile of the first cam 91. On the other hand, the second cam roller 62 and the second cam 92 are rotated in contact with each other. As a result, the second swing arm 60 oscillates with the swing arm shaft 40 as a fulcrum in accordance with the cam profile of the second cam 92.

Here, an explanation will be given on cam profiles of the first cam 91 and the second cam 92 with reference to Fig. 3 and Fig. 6. A projection part 91a of the first cam 91 has a front slant surface 91b and a rear slant surface 91c. A projection part 92a of the second cam 92 has a front slant surface 92b and a rear slant surface 92c. The front slant surface 91b and the front slant surface 92b are substantially overlapping each other in front view. The interval between the front slant surface 92b and the rear slant surface 92c is increased compared to the interval between the front slant surface 91b and the rear slant surface 91 c.

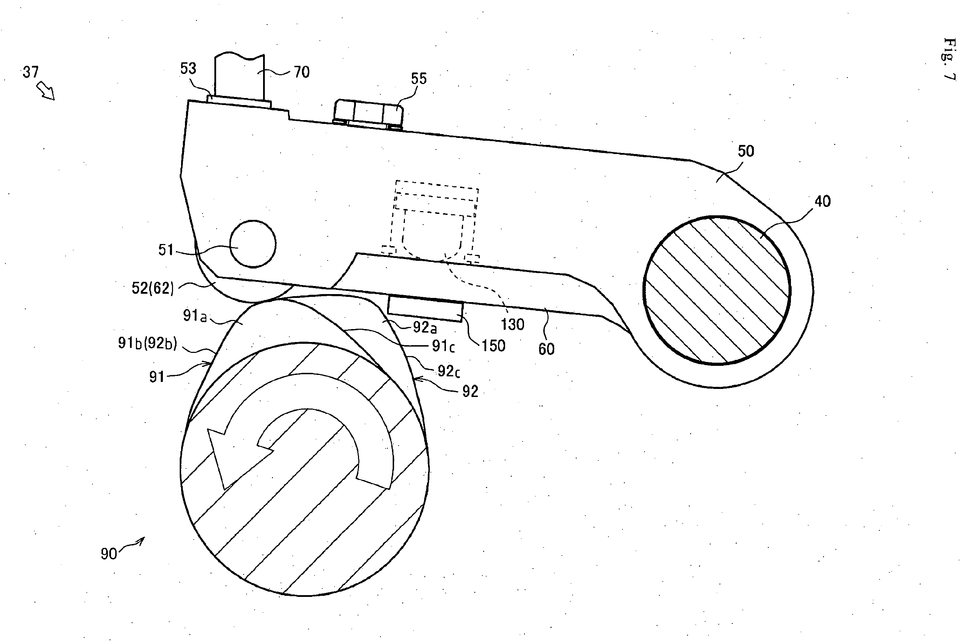

As shown in Fig. 7, the first cam roller 52 and the second cam roller 62 are made to abut on the front slant surface 91b and the front slant surface 92b respectively. When the first cam 91 and the second cam 92 are rotated in the direction of the outlined arrow, the first swing arm 50 and the second swing arm 60 are firstly rocked upward at the same time in accordance with the shapes of the front slant surface 91b and the front slant surface 92b. When the first swing arm 50 is rocked upward, the air intake valve 16 is opened through the intermediary of the push rod 70, the valve arm 80, and the intake connecting member 16a (see Fig. 1).

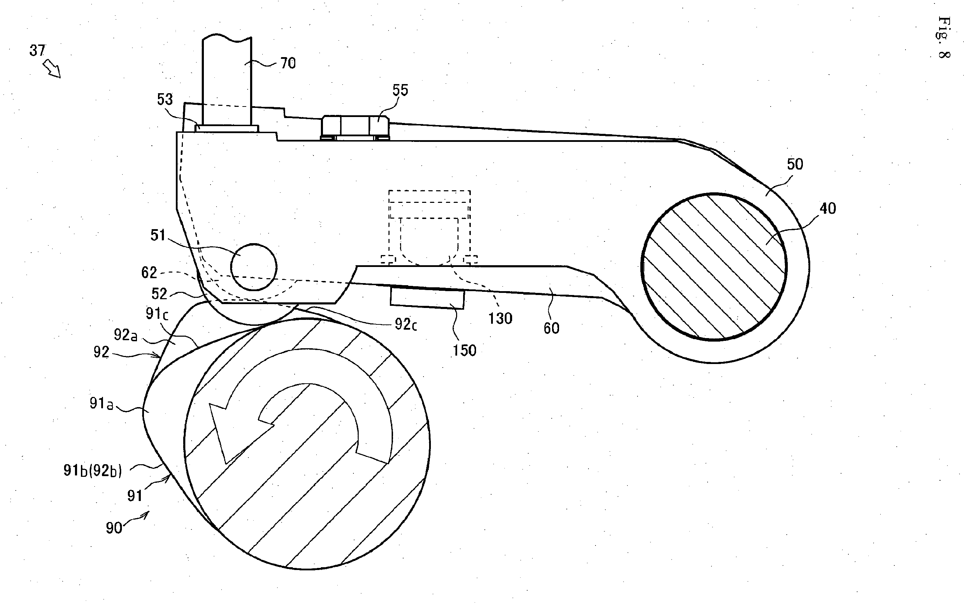

After that, as shown in Fig. 8, when the first cam 91 and the second cam 92 are further rotated in the direction of the outlined arrow, the first swing arm 50 is rocked downward earlier than the second swing arm 60 in accordance with the shape of the rear slant surface 91c. By forming the concave on the under surface of the first swing arm 50, the first swing arm 50 can be prevented from coming into contact with the receiving member 150 of the second swing arm 60 even though the second swing arm 60 remains in an upward oscillating condition. Thus, the swing of the first swing arm 50 is not obstructed by the receiving member 150. After the first swing arm 50 is rocked downward, the second swing arm 60 is rocked downward in a delayed fashion in accordance with the shape of the rear slant surface 92c. When the first swing arm 50 is rocked downward, the air intake valve 16 is closed (see Fig. 1). That is to say, the first swing arm 50 and the second swing arm 60 are operated individually. The timing of closure of the air intake valve 16 is determined in accordance with the operation of the first swing arm 50 despite the operation of the second swing arm 60.

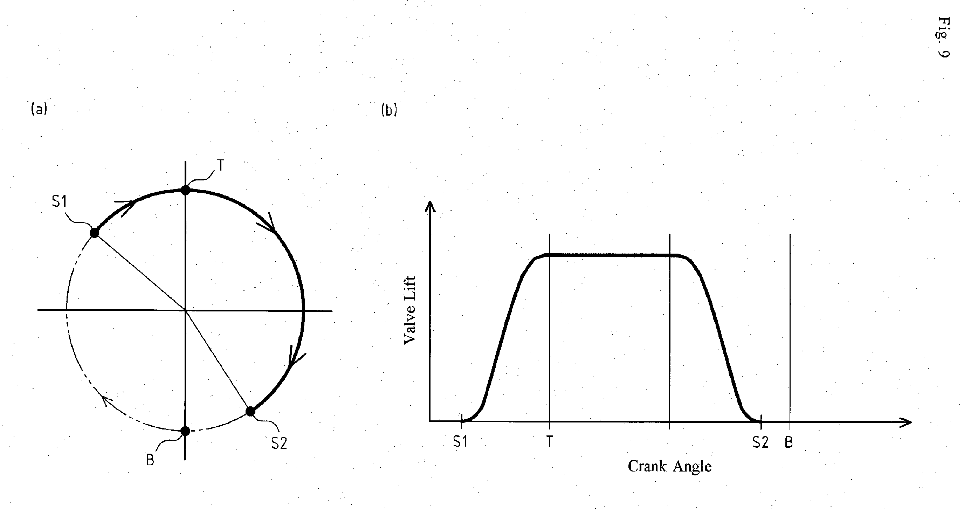

As shown in Fig. 9, the cam profile of the first cam 91 is set to realize the after-mentioned quick-closing type miller cycle. That is to say, the valve opening of the air intake valve 16 is initiated at a timing (S1) earlier than an upper dead point in the suction stroke (hereinafter referred to as "intake upper dead point") T of the piston 31. The lifting amount of the air intake valve 16 is maximized at the intake upper dead point T of the piston 31. And the valve closing of the air intake valve 16 is initiated at a timing earlier than a lower dead point in the suction stroke (hereinafter referred to as "intake lower dead point") B of the piston 31. The air intake valve 16 is completely closed at a timing (S2) earlier than the intake lower dead point B of the piston 31. The so-called quick-closing type miller cycle can be achieved by opening/closing the air intake valve 16 in accordance with the cam profile of the first cam 91.

Next, an explanation will be given for the case in which the engine 1 is in the low-load state.

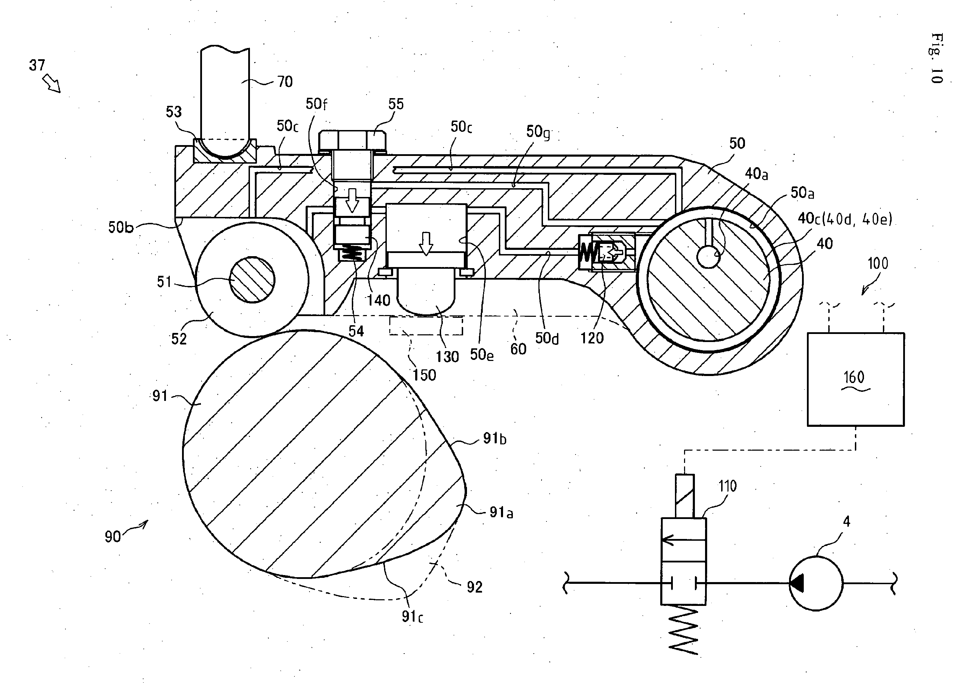

As shown in Fig. 10, when it is determined by the control device 160 that the engine 1 is in the low-load state, the intake port and the discharge port of the solenoid selector valve 110 is communicated with each other (hereinafter, this state is defined as "a second state"). Accordingly, the lubricating oil from the hydraulic pump 4 is fed to the first oil path 40a of the swing arm shaft 40. The lubricating oil fed to the first oil path 40a flows further through the first outer peripheral oil path 40c, and then fed to the switching oil path 50g. Also, the lubricating oil fed to the first oil path 40a flows further through the second outer peripheral oil path 40d, and then fed to the oil path for actuation of the piston 50d. The hydraulic pump 4 is communicated with the second oil path 40b of the swing arm shaft 40 via oil paths which are not illustrated here. Because of this, as is the case in the first state, the lubricating oil is fed to the first groove portion 50b and the second groove portion 60b, and thus the first cam roller 52 and the second cam roller 62 are lubricated.

The lubricating oil fed to the switching oil path 5g is then fed to the space above the selector valve 140 in the selector valve hole 50f i.e. to the space between the selector valve 140 and the bolt 55. Accordingly, the selector valve 140 is pressed downward by the lubricating oil introduced into the selector valve hole 50f. When this pressing force exceeds the biasing force of the spring 54, the selector valve 140 will move downward against the biasing force of the spring 54. When the selector valve 140 moves downward, the oil path for actuation of the piston 50d is blocked up by the selector valve 140, whereby the stream of the lubricating oil from the piston hole 50e to the first groove portion 50b is cut off.

The lubricating oil fed to the oil path for actuation of the piston 50d is then fed into the piston hole 50e through the intermediary of the check valve 120. The stream of the lubricating oil from the piston hole 50e to the first groove portion 50b (a part of the oil path for actuation of the piston 50d) is cut off. Because of this, the hydraulic piston 130 is pressed downward by the lubricating oil introduced into the piston hole 50e. The hydraulic piston 130 which is pressed by the lubricating oil will slide downward, and will be projected downward from the lower surface of the first swing arm 50. The hydraulic piston 130 is projected downward to a position in which the lower end terminal thereof is in contact with the upper surface of the receiving member 150 which is attached to the second swing arm 60. The hydraulic piston 130 is held in a state projected from the lower surface of the first swing arm 50 when the intake port and the discharge port of the solenoid selector valve 110 is communicated with each other by the control device 160.

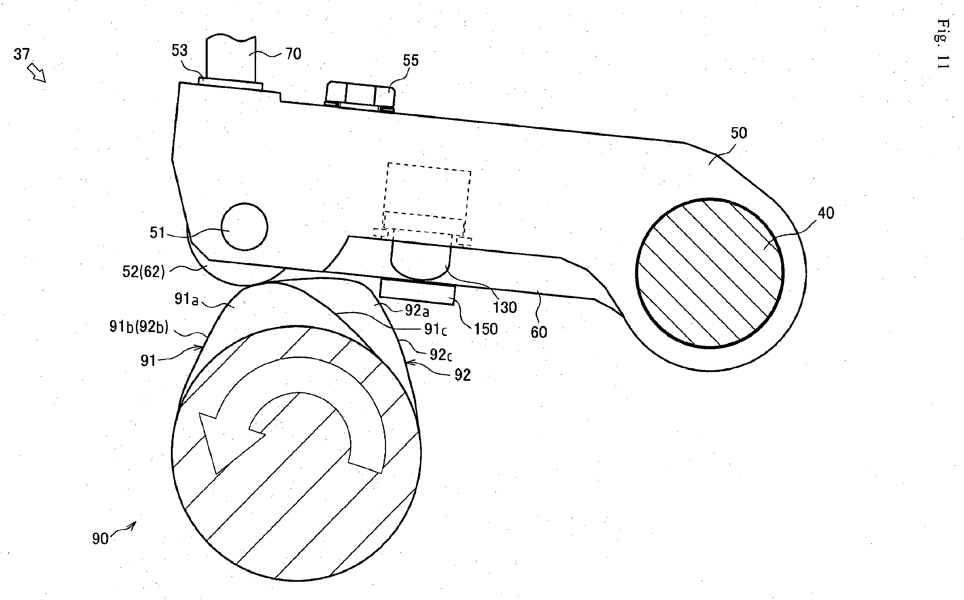

As shown in Fig. 11, when the cam shaft 90 rotates in this state, the first cam roller 52 and the first cam 91 are rotated in contact with each other. As a result, the first swing arm 50 oscillates with the swing arm shaft 40 as a fulcrum in accordance with the cam profile of the first cam 91. And the second cam roller 62 and the second cam 92 are rotated in contact with each other. As a result, the second swing arm 60 oscillates with the swing arm shaft 40 as a fulcrum in accordance with the cam profile of the second cam 92.

The first cam roller 52 and the second cam roller 62 are made to abut on the front slant surface 91b and the front slant surface 92b respectively. When the first cam 91 and the second cam 92 are rotated in the direction of the outlined arrow, the first swing arm 50 and the second swing arm 60 are firstly rocked upward at the same time in accordance with the shapes of the front slant surface 91b and the front slant surface 92b. When the first swing arm 50 is rocked upward, the air intake valve 16 is opened through the intermediary of the push rod 70, the valve arm 80, and the intake connecting member 16a (see Fig. 1).

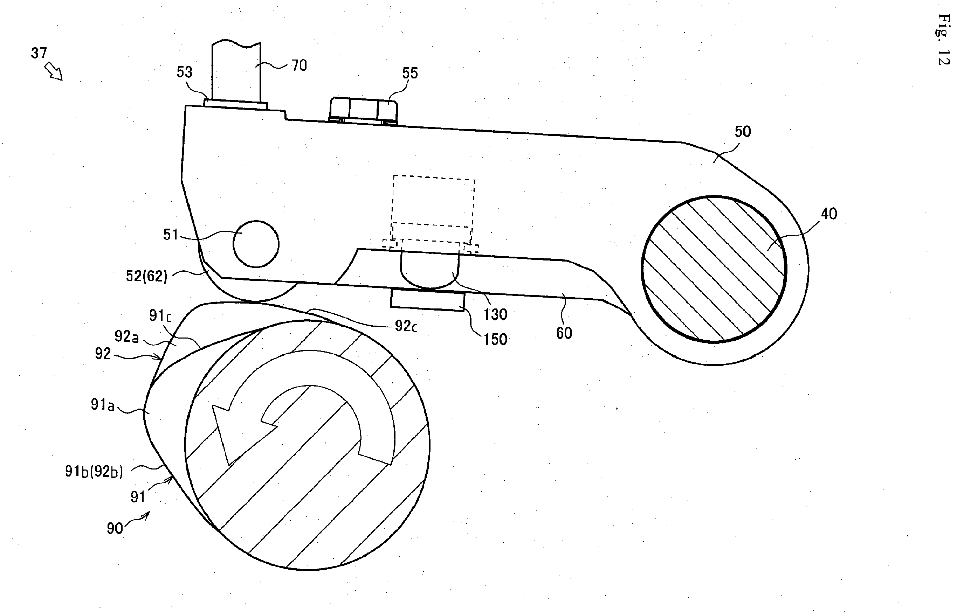

After that, as shown in Fig. 12, when the first cam roller 52 approaches the rear slant face 91c, the first cam roller 52 will be separated from the first cam 91 because the hydraulic piston 130 abuts on the receiving member 150. Accordingly, the first swing arm 50 cannot be rocked downward in accordance with the shape of the rear slant face 91c. In this condition, the first swing arm 50 is rocked by the rocking of the second swing arm 60. When the second swing arm 60 is rocked downward in accordance with the shape of the rear slant surface 92c, the first swing arm 50 is also rocked downward accompanying with the oscillation of the second swing arm 60. When the first swing arm 50 is rocked downward, the air intake valve 16 is closed (see Fig. 1). The first swing arm 50 works integrally with the second swing arm 60 at the valve-closing time of the air intake valve 16. The timing of closure of the air intake valve 16 is determined in accordance with the operation of the second swing arm 60.

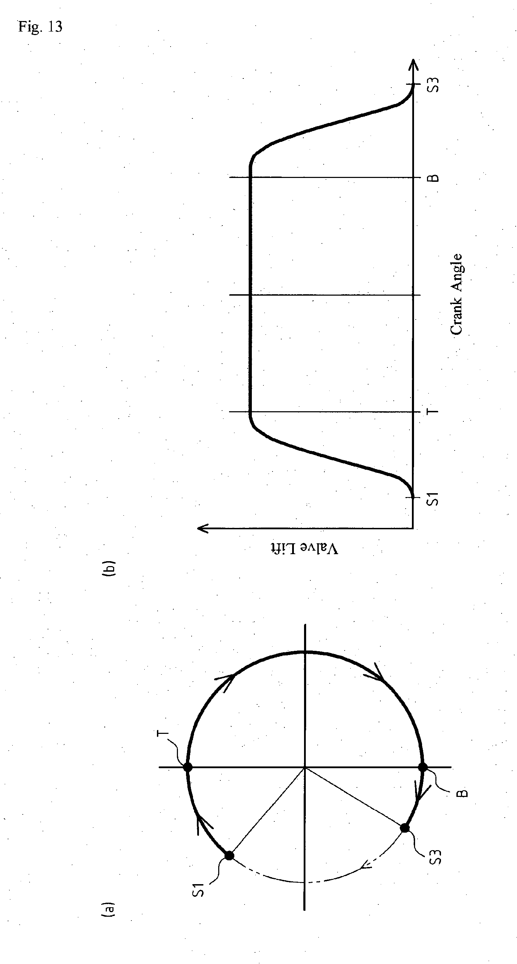

As shown in Fig. 13, the cam profile of the second cam 92 is so configured that the valve opening of the air intake valve 16 is initiated at a timing (S1) earlier than the intake upper dead point T of the piston 31, and the lifting amount of the air intake valve 16 is maximized at the intake upper dead point T of the piston 31. And the valve closing of the air intake valve 16 is initiated at timing near the intake lower dead point B of the piston 31. After that (S3), the air intake valve 16 is completely closed. While the valve closing of the air intake valve 16 in this embodiment is initiated at the timing near the intake lower dead point B of the piston 31, the present invention is not limited to this configuration. For example, it is also possible to initiate the valve closing of the air intake valve 16 at the timing of the intake lower dead point B of the piston 31.

As mentioned above, the timing of closure of the air intake valve 16 can be changed according to the operation conditions of the engine 1 by switching between the first state for high-load operation conditions, and the second state for low-load operation conditions by the control device 10. As a result, during the high-load operation, enough air is pushed into the cylinder 11a by the driving of the supercharger 2 even though the air intake valve 16 is closed at the timing earlier than the intake lower dead point (quick-closing type miller cycle). On the other hand, during the low-load operation, function of the supercharger 2 will drop compared to during the high-load operation because exhaust gas quantity will get smaller. Suppose that the timing of closure of the air intake valve 16 is the same as that of during the high-load operation, the air is not sufficiently supplied into the cylinder 11a. However, in this embodiment, the air intake valve 16 is closed at the timing posterior to that of during high-load operation. In more detail, the timing of closure of the air intake valve 16 is set to timing near the lower dead point in the suction stroke. As such, the intake period is extended compared to during the high-load operation, whereby enough air is pushed into the cylinder 11a. That is to say, even if it were during the high-load operation or low-load operation of the engine 1, the required amounts of air can be pushed into the cylinder 11a.

As mentioned above, the engine 1 in this embodiment is provided with the valve timing change mechanism 37 capable of changing the timing of closure of the air intake valve 16: wherein the valve timing change mechanism 37 is provided with: the cam shaft 90 which is rotated in an interlocked manner with the crankshaft 33; the first cam 91 and the second cam 92 which are provided to the cam shaft 90 and have mutually different cam profile; the first swing arm 50 with which the first cam 91 is in contact and which rocks as the first cam 91 rotates; the second swing arm 60 with which the second cam 92 is in contact and which rocks as the second cam 92 rotates; the push rod 70 which is connected to the first swing arm 50 and causes the first swing arm 50 and the air intake valve 16 to cooperate with each other; and the switchover means 100 which can switch between the first state in which the first swing arm 50 is caused to rock in response to the rotation of the first cam 91 and the second state in which the first swing arm 50 together with the second swing arm 60 is caused to rock in response to the rotation of the second cam 92.

Because of this configuration, the opening/closing timing of the air intake valve 16 is synchronized with the rotation of the first cam 91 or the second cam 92. The first cam 91 and the second cam 92 are different in cam profile from each other. The opening/closing timing of the air intake valve 16 can be changed to the timing corresponding to each cam. For example, as mentioned in this embodiment, the closing timing of the air intake valve 16 can be changed either to the timing earlier than the intake lower dead point B of the piston 31 or to the timing near the intake lower dead point B of the piston 31. In this case, the opening/closing timing of the air intake valve 16 can be switched with simple configuration. Accordingly, manufacturing costs can be reduced by reducing the number of parts and assembling manhours. And occurrence of a size error and occurrence of a mistake at an assembling time is prevented by reducing the number of parts and assembling manhours. Consequently, overall reliability of engine is improved.

Also, the switchover means 100 is provided with: the receiving member 150 which is attached to the second swing arm 60; and the hydraulic piston 130 which is attached to the first swing arm 50, with that the first swing arm 50 is parted from the first cam 91 and the first swing arm 50 is operated integrally with the second swing arm 60 by making the hydraulic piston 130 be brought into in contact with the receiving member 150.

Because of this configuration, the switchover means 100 can be simply constituted. Accordingly, manufacturing costs can be reduced by reducing the number of parts and reducing assembling manhours.

Also, the hydraulic piston 130 is actuated by the switchover means 100 by using lubricating oil supplied to each portion of the engine.

Because of this configuration, the switching mechanism is activated by utilizing lubricating oil of the engine 1, so that it is not necessary to separately use hydraulic pump etc. Accordingly, manufacturing costs can be reduced by reducing the number of parts and reducing assembling manhours.

Moreover, the lubricating oil for actuating the hydraulic piston 130 is supplied to the hydraulic piston 130 via: the oil path for actuation of the piston 50d which is formed in the first swing arm 50; and the first oil path 40a which is formed in the swing arm shaft 40 which is swingably supporting the first swing arm 50.

Because of this configuration, it is not necessary to separately arrange pipelines etc. for supplying lubricating oil for actuation of the hydraulic piston 130. Consequently, the number of parts can be reduced and also assembling manhours can be reduced.

Next, alternatives for the aforementioned lubricant supplying structure for the hydraulic piston 130 are considered.

In the first alternative, a pipeline etc. is connected from the outside to the oil path for actuation of the piston 50d of the first swing arm 50. The lubricating oil is fed to the hydraulic piston 130 via the pipeline etc. and the oil path for actuation of the piston 50d. In this case, there is danger that the pipeline etc. may come off due to the oscillation of the first swing arm 50. There is also danger that the pipeline etc. may become deformed or break.

In the second alternative, a flexible pipeline etc. is connected to the oil path for actuation of the piston 50d to deal with the oscillation of the first swing arm 50. In this case, the flexible pipeline etc. moves and bends following the movement of the first swing arm 50, causing the deformation of the cross-sectional shape of the flexible pipeline etc. For this reason, it is difficult to supply lubricating oil stably to the hydraulic piston 130. Also, there is danger that the flexible pipeline etc. may come off due to the oscillation of the first swing arm 50.

However, in this embodiment, lubricant supplying structure in the hydraulic piston 130 is so configured that the first oil path 40a which is formed in the swing arm shaft 40 which is swingably supporting the first swing arm 50 is connected to the oil path for actuation of the piston 50d. The lubricating oil is fed to the hydraulic piston 130 via the first oil path 40a and the oil path for actuation of the piston 50d. Accordingly, the cross-sectional shape of the first oil path 40a is maintained constant even when the first swing arm 50 swings. That is to say, the oscillation of the first swing arm 50 would not influence feeding of lubricating oil to the hydraulic piston 130. Consequently, lubricating oil can be stably supplied to the hydraulic piston 130.

Moreover, the first swing arm 50 is provided with a cam roller 52 which is rotatably supported by the first swing arm 50 and with which the first cam 91 is in contact. And the lubricating oil for lubricating the first cam roller 52 is provided to the first cam roller 52 via: the oil path for lubrication of the first roller 50c which is formed in the first swing arm 50 separately from the oil path for actuation of the piston 50d; and the second oil path 40b which is formed in the swing arm shaft 40 separately from the first oil path 40a.

Because of this configuration, it is not necessary to separately arrange pipelines etc. for supplying lubricating oil for lubrication of the first cam roller 52. Accordingly, the number of parts can be reduced and also assembling manhours can be reduced. Also, lubricating oil can be supplied to the first cam roller through the oil path which is formed separately from the oil path for actuation of the piston 50d. Supposing that the lubricant supplying structure for the first cam roller 52 is partly overlapping the lubricating supplying structure for the hydraulic piston 130, in some situations depending on the operation state of the hydraulic piston 130, flow of lubricating oil in the said oil paths may be obstructed. In this embodiment, such fear does not exist because the lubricant supplying structure for the first cam roller 52 is separated from the lubricating supplying structure for the hydraulic piston 130. Consequently, lubricating oil can be stably supplied to the first cam roller 52, and thus the first cam roller 52 can be surely lubricated.

Moreover, the selector valve 140 for changing the operation of the hydraulic piston 130 is mounted on the first swing arm 50.

Because of this configuration, the number of parts can be reduced and also assembling manhours can be reduced. The switchover means can be compactly constituted and thereby the space required for the switchover means is reduced.

Moreover, at least one of the cam profile of the first cam 91 and the cam profile of the second cam 92 is designed to adjust the timing of closure of the air intake valve 16 earlier than the intake lower dead point B in the suction stroke.

Because of this configuration, the combustion temperature can be reduced by adiabatic expansion of the air in the cylinder 11 a because the timing of closure of the air intake valve 16 is accelerated. Accordingly, reduction of NOx emission can be materialized.

Moreover, the engine 1 with the supercharger 2 according to this embodiment is provided with: the valve timing change mechanism 37 capable of changing the timing of closure of an air intake valve 16; and the supercharger 2 forcibly feeding air into the cylinder 11a by the use of exhaust gas energy. The valve timing change mechanism 37 is so configured that, during the high-load operation, the timing of closure of the air intake valve 16 is set to timing earlier than the intake lower dead point B in the suction stroke, and, during the low-load operation, the timing of closure of the air intake valve 16 is set to timing later than that during the high-load operation.

Because of this configuration, the supercharger 2 is made to sufficiently function during the high-load operation since the amount of exhaust gas is large. In this case, the combustion temperature is lowered by so-called quick-closing type miller cycle. Accordingly, reduction of NOx emission can be materialized. On the other hand, the function of the supercharger 2 will drop during the low-load operation since the amount of exhaust gas is small. If the timing of closure of the air intake valve 16 is the same as that of during the high-load operation, the forcible feeding quantity of the air into the cylinder 11a is decreased. However, in this embodiment, the timing of closure of the air intake valve 16 is set to timing later than that during the high-load operation. That is to say, the timing of closure of the air intake valve 16 is set to timing near the intake lower dead point B. Accordingly, the air is sufficiently fed into the cylinder 11a. Consequently, increase of black smoke generated can be prevented. Also, performance deterioration such as deterioration of acceleration property and start-up performance can be prevented. In this way, the timing of closure of the air intake valve 16 is switched between during the low-load operation and during the high-load operation. Accordingly, the amount of NOx generated can be reduced, and also performance deterioration can be prevented.

Also, the valve timing change mechanism 37 is so configured that, during low-load operation, the timing of closure of the air intake valve 16 is set to timing near the intake lower dead point B in the suction stroke.

Because of this configuration, enough air can be sufficiently fed during the low-load operation. Accordingly, increase of black smoke generated can be prevented. Also, performance deterioration such as deterioration of acceleration property and start-up performance can be prevented.

Also, the valve timing change mechanism 37 is provided with: the cam shaft 90 which is rotated in an interlocked manner with the crankshaft 33; the first cam 91 and the second cam 92 which are provided to the cam shaft 90 and have mutually different cam profile; the first swing arm 50 with which the first cam 91 is in contact and which rocks as the first cam 91 rotates; the second swing arm 60 with which the second cam 92 is in contact and which rocks as the second cam 92 rotates; the push rod 70 which is connected to the first swing arm 50 and causes the first swing arm 50 and the air intake valve 16 to cooperate with each other; and the switchover means 100 which can switch between the first state in which the first swing arm 50 is caused to rock in response to the rotation of the first cam 91 and the second state in which the first swing arm 50 together with the second swing arm 60 is caused to rock in response to the rotation of the second cam 92. The timing of closure of the air intake valve 16 is determined depending on the cam profile of the first cam 91 and the cam profile of the second cam 92.

Because of this configuration, the opening/closing timing of the air intake valve 16 is synchronized with the rotation of the first cam 91 or the second cam 92. The first cam 91 and the second cam 92 are different in cam profile from each other. The timing of closure of the air intake valve 16 during high-load operation differs from that of during low-load operation. In this way, during high-load operation, reduction of NOx emission can be materialized. On the other hand, during low-load operation, performance deterioration can be prevented. In this case, the opening/closing timing of the air intake valve 16 can be switched with simple configuration. Accordingly, manufacturing costs can be reduced by reducing the number of parts and assembling manhours.

In this embodiment, the cam profile of the first cam 91 is designed to adjust the timing of closure of the air intake valve 16 earlier than the intake lower dead point B. However, the present invention is not limited to this configuration. For example, the second cam 92 may also be designed to adjust the timing of closure of the air intake valve 16 earlier than the intake lower dead point B.

In this embodiment, the valve timing change mechanism 37 is configured so as to realize so-called quick-closing type miller cycle in the first state. However, the present invention is not limited to this configuration. For example, the valve timing change mechanism 37 may be configured so as to realize slow-closing type miller cycle. The timing of closure of the air intake valve 16 may be set to arbitrary timing by designing the cam profiles of the first cam 91 and the second cam 92 appropriately.

The configuration of the valve timing change mechanism 37 is not limited to the embodiment shown. For example, the mounting angle of the first cam 91 or the second cam 92 to be fitted to the cam shaft 90 may be made changeable by hydraulic system etc.

In this embodiment, the control device 160 determines the operating state of the engine 1 (whether the engine 1 is in the high-load operating state or in the low-load operating state) on the basis of the detection value of the fuel injection quantity detection means 161 and the engine rotation speed detection means 162. However, the present invention is not limited to such a configuration. For example, the operating state of the engine 1 may be determined on the basis of exhaust gas quantity.

### Industrial Applicability

The present invention is utilizable for the art of engine adopting so-called miller cycle, wherein the timing of closure of an air intake valve is set to timing earlier/later than an intake lower dead point.

## Claims

1. An engine (1) comprising a valve timing change mechanism (37) capable of changing a timing for closing an air intake valve (16):
wherein the valve timing change mechanism (37) includes:
a cam shaft (90) rotatably interlocked with a crankshaft (33);
a first cam (91) and a second cam (92) provided on the cam shaft (90) and having different cam profiles;
a first swing arm (50) contacting the first cam (91) so as to be rocked according to rotation of the first cam (91);
a second swing arm (60) contacting the second cam (92) so as to be rocked according to rotation of the second cam (92); and
a push rod (70) connected to the first swing arm (50) so as to cause the first swing arm (50) and the air intake valve (16) to cooperate with each other;
**characterized in that**:
the first swing arm (50) is formed with a downwardly open piston hole (50e), and
the valve timing change mechanism (37) further comprises:
a receiving member (150) attached to the second swing (60) and extended to face a concave lower surface of the first swing arm (50) so as to overlap the piston hole (50e) in the bottom view; and
a hydraulic actuator (130) vertically slidably attached in the piston hole (50e) of the first swing arm (50), so that when the hydraulic actuator (130) slides downward and projects downward from the lower surface of the first swing arm (50) so as to contact the receiving member (150), the first swing arm (50) is parted from the first cam (91) and the first swing arm (50) is operated integrally with the second swing arm (92).

2. The engine according to claim 1, wherein the hydraulic actuator (130) is actuated by lubricating oil supplied to lubricated portions of the engine (1).

3. The engine according to claim 2,
wherein the first swing arm (50) is formed therein with a hydraulic actuator actuating oil path (50d),
wherein a swing arm shaft (40) swingably supporting the first swing arm (50) is formed therein with a first oil path (40a), and
wherein lubricating oil for actuating the hydraulic actuator (130) is supplied to the piston hole (50e) via the first oil path (40a) and the hydraulic actuator actuating oil path (50d) so as to cause the downward slide of the hydraulic actuator (130).

4. The engine according to claim 3,
wherein the first swing arm (50) rotatably supports a cam roller (52) to contact the first cam (91),
wherein the first swing arm (50) is formed therein with a roller lubricating oil path (50c) in addition to the hydraulic actuator actuating oil path (50d),
wherein the swing arm shaft (40) is formed therein with a second oil path (40b) in addition to the first oil path (40a), and
wherein lubricating oil for lubricating the cam roller (52) is provided to the cam roller (52) via the second oil path (40b) and the roller lubricating oil path (50c).

5. The engine according to claim 4, wherein a selector valve (140) for changing the operation of the hydraulic actuator (130) is mounted on the first swing arm (50).

6. The engine according to any one of claims 1 to 5, wherein at least one of the cam profiles of the first cam (91) and the cam profile of the second cam (92) is designed to set the timing of closing the air intake valve (16) as a timing (S2) earlier than a lower dead point (B) in a suction stroke of a piston (31) in a cylinder (11a) of the engine (1).

7. The engine according to any one of claims 1 to 5,
wherein the valve timing change mechanism (37) is configured so that, during a high-load operation of the engine (1), the timing for closing the air intake valve (16) is set as a timing (S2) earlier than a lower dead point (B) in a suction stroke of a piston (31) in a cylinder (11a) of the engine (1), and so that, during a low-load operation of the engine (1), the timing for closing the air intake valve (16) is set as another timing (S3) later than the timing (S2) set during the high-load operation of the engine (1).

8. The engine according to claim 7, wherein the timing (S3) for closing the air intake valve (16) set during the low-load operation of the engine (1) approximates the lower dead point (B) in the suction stroke of the piston (31).

9. The engine according to claim 7 or 8, wherein the engine (1) further comprises a supercharger (2) for forcibly feeding air into the cylinder (11a) by use of exhaust gas energy.

## Patentansprüche

1. Motor (1), der einen Ventilzeiteinstellungs-Änderungsmechanismus (37) umfasst, der eine Zeiteinstellung zum Schließen eines Lufteinlassventils (16) ändern kann:
wobei der Ventilzeiteinstellungs-Änderungsmechanismus (37) enthält:
eine Nockenwelle (90), die mit einer Kurbelwelle (33) drehbar verriegelt ist;
einen ersten Nocken (91) und einen zweiten Nocken (92), die an der Nockenwelle (90) vorgesehen sind und die unterschiedliche Nockenprofile aufweisen;
einen ersten Schwinghebel (50), der den ersten Nocken (91) in der Weise berührt, dass er in Übereinstimmung mit der Drehung des ersten Nockens (91) hin- und herbewegt wird;
einen zweiten Schwinghebel (60), der den zweiten Nocken (92) in der Weise berührt, dass er in Übereinstimmung mit der Drehung des zweiten Nockens (92) hin- und herbewegt wird; und
eine Stößelstange (70), die in der Weise mit dem ersten Schwinghebel (50) verbunden ist, dass sie veranlasst, dass der erste Schwinghebel (50) und das Lufteinlassventil (16) zusammenwirken;
**dadurch gekennzeichnet, dass**:
der erste Schwinghebel (50) mit einer nach unten offenen Kolbenbohrung (50e) gebildet ist, und
der Ventilzeiteinstellungs-Änderungsmechanismus (37) ferner umfasst:
ein Aufnahmeelement (150), das an dem zweiten Schwinghebel (60) befestigt ist und in der Weise verläuft, dass es einer konkaven unteren Oberfläche des ersten Schwinghebels (50) gegenüberliegt, sodass es sich in der Unteransicht mit der Kolbenbohrung (50e) überlappt; und
einen Hydraulikaktuator (130), der in der Kolbenbohrung (50e) des ersten Schwinghebels (50) vertikal gleitfähig befestigt ist, sodass der erste Schwinghebel (50) von dem ersten Nocken (91) getrennt wird und der erste Schwinghebel (50) einteilig mit dem zweiten Schwinghebel (92) betrieben wird, wenn der Hydraulikaktuator (130) nach unten gleitet und von der unteren Oberfläche des ersten Schwinghebels (50) nach unten vorsteht, um das Aufnahmeelement (150) zu berühren.

2. Motor nach Anspruch 1, wobei der Hydraulikaktuator (130) durch Schmieröl betätigt wird, das geschmierten Abschnitten des Motors (1) zugeführt wird.

3. Motor nach Anspruch 2,
wobei der erste Schwinghebel (50) darin mit einem Hydraulikaktuator-Betätigungsölweg (50d) gebildet ist,
wobei eine Schwinghebelwelle (40), die den ersten Schwinghebel (50) schwingfähig stützt, darin mit einem ersten Ölweg (40a) gebildet ist, und wobei der Kolbenbohrung (50e) über den ersten Ölweg (40a) und über den Hydraulikaktuator-Betätigungsölweg (50d) Schmieröl zum Betätigen des Hydraulikaktuators (130) zugeführt wird, um zu veranlassen, dass der Hydraulikaktuator (130) nach unten gleitet.

4. Motor nach Anspruch 3,
wobei der erste Schwinghebel (50) eine Kurvenrolle (52), die den ersten Nocken (91) berührt, drehbar stützt,
wobei der erste Schwinghebel (50) darin außer mit dem Hydraulikaktuator-Betätigungsölweg (50d) mit einem Rollenschmierölweg (50c) gebildet ist, wobei die Schwinghebelwelle (40) darin außer mit dem ersten Ölweg (40a) mit einem zweiten Ölweg (40b) gebildet ist, und
wobei für die Kurvenrolle (52) über den zweiten Ölweg (40b) und den Rollenschmierölweg (50c) Schmieröl zum Schmieren der Kurvenrolle (52) bereitgestellt wird.

5. Motor nach Anspruch 4, wobei an dem ersten Schwinghebel (50) ein Wählventil (140) zum Ändern des Betriebs des Hydraulikaktuators (130) angebracht ist.

6. Motor nach einem der Ansprüche 1 bis 5, wobei die Nockenprofile des ersten Nockens (91) und/oder das Nockenprofil des zweiten Nockens (92) dafür ausgelegt sind, die Zeiteinstellung des Schließens des Lufteinlassventils (16) als eine Zeiteinstellung (S2) früher als ein unterer Totpunkt (B) in einem Ansaugtakt eines Kolbens (31) in einem Zylinder (11a) des Motors (1) einzustellen.

7. Motor nach einem der Ansprüche 1 bis 5,
wobei der Ventilzeiteinstellungs-Änderungsmechanismus (37) so konfiguriert ist, dass die Zeiteinstellung zum Schließen des Lufteinlassventils (16) während eines Hochlastbetriebs des Motors (1) als eine Zeiteinstellung (S2) früher als ein unterer Totpunkt (B) in einem Ansaugtakt eines Kolbens (31) in einem Zylinder (11a) des Motors (1) eingestellt wird und dass die Zeiteinstellung zum Schließen des Lufteinlassventils (16) während eines Niederlastbetriebs des Motors (1) als eine andere Zeiteinstellung (S3), später als die während des Hochlastbetriebs des Motors (1) eingestellte Zeiteinstellung (S2), eingestellt wird.

8. Motor nach Anspruch 7, wobei sich die während des Niederlastbetriebs des Motors (1) eingestellte Zeiteinstellung (S3) zum Schließen des Lufteinlassventils (16) dem unteren Totpunkt (B) in dem Ansaugtakt des Kolbens (31) annähert.

9. Motor nach Anspruch 7 oder 8, wobei der Motor (1) ferner einen Lader (2) umfasst, um unter Verwendung von Abgasenergie zwangsläufig Luft in den Zylinder (11a) einzuspeisen.

## Revendications

1. Moteur (1) comprenant un mécanisme de changement de réglage de distribution (37) capable de changer un moment pour fermer une soupape d'admission d'air (16) :
dans lequel le mécanisme de changement de réglage de distribution (37) inclut :
un arbre à cames (90) verrouillé à rotation avec un vilebrequin (33) ;
une première came (91) et une seconde came (92) prévues sur l'arbre à cames (90) et ayant différents profils de came ;
un premier bras oscillant (50) venant en contact avec la première came (91) de manière à être basculé en fonction de la rotation de la première came (91) ;
un second bras oscillant (60) venant en contact avec la seconde came (92) de manière à être basculé en fonction de la rotation de la seconde came (92) ; et
une tige de culbuteur (70) connectée au premier bras oscillant (50) de manière à amener le premier bras oscillant (50) et la soupape d'admission d'air (16) à coopérer l'un avec l'autre ;
**caractérisé en ce que** :
le premier bras oscillant (50) est formé d'un orifice de piston ouvert vers le bas (50e), et
le mécanisme de changement de réglage de distribution (37) comprend en outre :
un élément de réception (150) relié au second oscillant (60) et étendu pour faire face à une surface inférieure concave du premier bras oscillant (50) de manière à chevaucher l'orifice de piston (50e) dans la vue de dessous ; et
un actionneur hydraulique (130) relié de manière à pouvoir coulisser verticalement dans l'orifice de piston (50e) du premier bras oscillant (50) de sorte que, lorsque l'actionneur hydraulique (130) coulisse vers le bas et fait saillie vers le bas depuis la surface inférieure du premier bras oscillant (50) de manière à venir en contact avec l'élément de réception (150), le premier bras oscillant (50) est séparé de la première came (91) et le premier bras oscillant (50) est opéré intégralement avec le second bras oscillant (92).

2. Moteur selon la revendication 1, dans lequel l'actionneur hydraulique (130) est actionné par de l'huile lubrifiante fournie à des portions lubrifiées du moteur (1).

3. Moteur selon la revendication 2,
dans lequel le premier bras oscillant (50) est formé en son sein d'un trajet d'huile actionnant l'actionneur hydraulique (50d),
dans lequel un arbre de bras oscillant (40) supportant de manière à pouvoir osciller le premier bras oscillant (50) est formé en son sein d'un premier trajet d'huile (40a), et dans lequel de l'huile lubrifiante pour actionner l'actionneur hydraulique (130) est fournie à l'orifice de piston (50e) par le biais du premier trajet d'huile (40a) et du trajet d'huile actionnant l'actionneur hydraulique (50d) de manière à provoquer le coulissement vers le bas de l'actionneur hydraulique (130).

4. Moteur selon la revendication 3,
dans lequel le premier bras oscillant (50) supporte à rotation un galet de came (52) pour venir en contact avec la première came (91),
dans lequel le premier bras oscillant (50) est formé en son sein d'un trajet d'huile lubrifiante de galet (50c) outre le trajet d'huile actionnant l'actionneur hydraulique (50d),
dans lequel l'arbre de bras oscillant (40) est formé en son sein d'un second trajet d'huile (40b) outre le premier trajet d'huile (40a), et
dans lequel de l'huile lubrifiante pour lubrifier le galet de came (52) est fournie au galet de came (52) par le biais du second trajet d'huile (40b) et du trajet d'huile lubrifiante de galet (50c).

5. Moteur selon la revendication 4, dans lequel un sélecteur (140) pour changer l'opération de l'actionneur hydraulique (130) est monté sur le premier bras oscillant (50).

6. Moteur selon l'une quelconque des revendications 1 à 5, dans lequel au moins un des profils de came de la première came (91) et du profil de came de la seconde came (92) est conçu pour régler le moment de fermeture de la soupape d'admission d'air (16) comme moment (S2) antérieur à un point mort inférieur (B) dans une course d'aspiration d'un piston (31) dans un cylindre (11a) du moteur (1).

7. Moteur selon l'une quelconque des revendications 1 à 5,
dans lequel le mécanisme de changement de réglage de distribution (37) est configuré de sorte qu'au cours d'une opération de charge élevée du moteur (1), le moment pour fermer la soupape d'admission d'air (16) est réglé comme moment (S2) antérieur à un point mort inférieur (B) dans une course d'aspiration d'un piston (31) dans un cylindre (11a) du moteur (1) et de sorte qu'au cours d'une opération de faible charge du moteur (1), le moment pour fermer la soupape d'admission d'air (16) est réglé comme un autre moment (S3) postérieur au moment (S2) réglé au cours de l'opération de charge élevée du moteur (1).

8. Moteur selon la revendication 7, dans lequel le moment (S3) pour fermer la soupape d'admission d'air (16) réglé au cours de l'opération de faible charge du moteur (1) approche le point mort inférieur (B) dans la course d'aspiration du piston (31).

9. Moteur selon la revendication 7 ou 8, dans lequel le moteur (1) comprend en outre un compresseur volumétrique (2) pour alimenter de l'air de force dans le cylindre (11a) par l'utilisation d'énergie de gaz d'échappement.
